(19) 

Europäisches Patentamt
European Patent Office
Office européen des brevets

(11) **EP 4 406 421 A1**

(12) **EUROPEAN PATENT APPLICATION**
published in accordance with Art. 153(4) EPC

(43) Date of publication:
**31.07.2024 Bulletin 2024/31**

(21) Application number: **22872946.3**

(22) Date of filing: **21.09.2022**

(51) International Patent Classification (IPC):
**A23L 5/00** (2016.01)   **A23C 9/123** (2006.01)
**A23L 29/00** (2016.01)

(52) Cooperative Patent Classification (CPC):
**A23C 9/123; A23L 5/00; A23L 29/00**

(86) International application number:
**PCT/JP2022/035225**

(87) International publication number:
**WO 2023/048195 (30.03.2023 Gazette 2023/13)**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**
Designated Validation States:
**KH MA MD TN**

(30) Priority: **21.09.2021   JP 2021153628**

(71) Applicant: **Amano Enzyme Inc.**
**Nagoya-shi**
**Aichi 460-8630 (JP)**

(72) Inventor: **SAKAI, Kiyota**
**Kakamigahara-shi, Gifu 509-0109 (JP)**

(74) Representative: **Müller-Boré & Partner**
**Patentanwälte PartG mbB**
**Friedenheimer Brücke 21**
**80639 München (DE)**

(54) **PRODUCTION METHOD FOR PROTEIN FERMENTED FOOD OR BEVERAGE**

(57)    The object of the present invention is to provide a processing method that makes it possible to improve various characteristics related to a fermented food or beverage that uses a protein ingredient (and, in particular, characteristics of the fermented food or beverage itself such as stress, water retention, suppression of water release, and the like or characteristics of the ingredients of the fermented food or beverage related to fermentation speed during production of the fermented food or beverage). The present invention improves various characteristics of a fermented food or beverage that uses a protein ingredient using the action of a protein deamidase and a multicopper oxidase during production of the fermented food or beverage.

EP 4 406 421 A1

**Description**

TECHNICAL FIELD

The present invention relates to a method for producing a protein fermented food or beverage. More specifically, the present invention relates to a technique for modifying properties of a protein fermented food or beverage, such as its own stress, water retention, or syneresis inhibition, or properties of a fermented food or beverage material related to the fermentation speed during production.

BACKGROUND ART

In response to the recent increase in health consciousness, fermented foods and beverages produced as a part of traditional food preservation techniques are considered as superfoods, and are again in the limelight in the food and beverage market.

Thus, some studies on modification of fermented foods and beverages have been made so far. For example, Patent Document 1 discloses a method for producing yogurt having the original smooth texture of yogurt without causing syneresis by adding transglutaminase to a milk raw material. Patent Document 2 discloses that the addition of glucose oxidase in the production step of fermented milk significantly suppresses syneresis and an increase in the particle size of milk protein caused by the aggregation of milk proteins as compared with the case where glucose oxidase is not added. Patent Document 3 discloses a method for producing a fermented milk with a smooth structure and reduced whey separation by adding a peroxidase and a whey protein concentrate and/or a whey protein isolate to a yogurt mix and fermenting the mixture with lactic acid bacteria.

PRIOR ART DOCUMENTS

PATENT DOCUMENTS

Patent Document 1: Japanese Patent Laid-open Publication No. H06-197688
Patent Document 2: WO 2012/121090 A
Patent Document 3: Japanese Patent Laid-open Publication No. H06-276933

SUMMARY OF THE INVENTION

PROBLEMS TO BE SOLVED BY THE INVENTION

In order that the share of fermented foods and beverages in the food and beverage market can be further increased and the fermented foods and beverages can be accepted by a larger number of consumers, it is desired to improve various properties that affect preference, production efficiency, and the like (for example, properties of the fermented food or beverage itself, such as stress, water retention, or syneresis inhibition, or properties related to the fermentation efficiency during production of the fermented food or beverage).

It is therefore an object of the present invention to provide a processing technique capable of improving various properties related to a fermented food or beverage using a protein material (in particular, properties of the fermented food or beverage itself, such as stress, water retention, or syneresis inhibition, or properties of the fermented food or beverage material related to the fermentation speed during production of the fermented food or beverage).

MEANS FOR SOLVING THE PROBLEM

The present inventor has found that by applying a combination of a protein deamidase and a multicopper oxidase, which is a combination of enzymes that has not been used as a means for improving various properties related to fermented foods and beverages, to a production process of a protein fermented food or beverage, various properties related to the resulting protein fermented food or beverage are improved. The present invention has been completed by further conducting studies based on this finding.

That is, the present invention provides inventions of the following aspects.

Item 1. A method for producing a protein fermented food or beverage, the method including the steps of: fermenting a protein material; and treating with a protein deamidase and a multicopper oxidase.

Item 2. The method according to item 1, in which the protein deamidase is protein glutaminase.

Item 3. The method according to item 1 or 2, in which the multicopper oxidase is laccase.

Item 4. The method according to any one of items 1 to 3, in which the protein material is cow's milk.

Item 5. The method according to any one of items 1 to 4, in which the protein fermented food or beverage is yogurt.

Item 6. A modifier for a protein fermented food or beverage, including a protein deamidase and a multicopper oxidase.

Item 7. The modifier according to item 6, which is used as a stress improver for a protein fermented food or beverage.

Item 8. The modifier according to item 6, which is used as a water retention improver for a protein fermented food or beverage.

Item 9. The modifier according to item 6, which is used as a syneresis inhibitor for a protein fermented food or beverage.

Item 10. A fast-fermenting agent in production of a protein fermented food or beverage, including a protein deamidase and a multicopper oxidase.

ADVANTAGES OF THE INVENTION

According to the present invention, it is possible to improve various properties related to a fermented food or beverage using a protein material (in particular, properties of the fermented food or beverage itself, such as stress, water retention, or syneresis inhibition, or properties of the fermented food or beverage material related to the fermentation speed during production of the fermented food or beverage).

EMBODIMENTS OF THE INVENTION

1. Method for Producing Protein Fermented Food or Beverage

The method of the present invention for producing a protein fermented food or beverage includes a step of fermenting a protein material and a step of treating with a protein deamidase and a multicopper oxidase. This makes it possible to improve various properties related to the resulting protein fermented food or beverage. Hereinafter, the method of the present invention for producing a protein fermented food or beverage will be described in detail.

In the following description, the various properties related to the protein fermented food or beverage are at least one of properties such as stress, water retention, syneresis inhibition, and digestibility of the fermented food or beverage itself; and properties of the fermented food or beverage material related to the fermentation speed during production of the fermented food or beverage.

1-1. Protein Material

The protein material is not particularly limited as long as it contains a protein and serves as a food or beverage ingredient.

The origin of the protein is not particularly limited, and the protein may be any of an animal protein, a plant protein, and a synthetic protein. Examples of the animal protein include milk proteins such as casein and β-lactoglobulin; egg proteins such as ovalbumin; meat proteins such as myosin and actin; blood proteins such as serum albumin; tendon proteins such as gelatin and collagen. Examples of the plant protein include pulse proteins such as soybeans, peas, lupin beans, fava beans, chickpeas, mung beans, and common beans; cereal proteins such as oats, barley, wheat, rye, rice, buckwheat, barnyard millet, foxtail millet, teff, quinoa, and corn; and seed proteins such as canary seeds, linseeds, almond, cashew nuts, hazelnuts, pecan nuts, macadamia nuts, pistachio, walnuts, brazil nuts, peanuts, coconuts, hemp, pili nuts, chestnuts, sesame, and pine nuts. In addition, these proteins may be in the form of a chemically partially degraded protein by an acid, an alkali, or the like, an enzymatically partially degraded protein by a protease or the like, or a chemically modified protein by various reagents.

These proteins may be used singly or in combination of two or more kinds thereof. Among these proteins, animal proteins are preferred, and milk proteins are more preferred, from the viewpoint that the effect of improving various properties related to the protein fermented food or beverage is further enhanced.

The specific form of the protein material is not particularly limited as long as the protein material can be a material for a fermented food or beverage, and the form may be any form such as a liquid form, a gel form, or a solid form, but is preferably a liquid form.

More specific forms of the liquid protein material include forms exhibiting fluidity such as an aqueous solution, an aqueous dispersion, and an aqueous dispersion paste, of the protein.

Specific examples of the liquid protein material containing an animal protein (that is, the liquid animal protein material) include milk, liquid egg, liquid egg diluent, meat homogenate liquid, and tendon protein solution, and milk is preferable.

As long as the liquid protein material containing the plant protein (that is, the liquid plant protein material) is at least a liquid in which the plant protein is dissolved and/or dispersed in water, any liquid is acceptable. Specific examples include, (i) a liquid obtained by crushing and dispersing a food raw material containing the plant protein in water, and removing an insoluble matter derived from the skin or the like of the food raw material by any means such as centrifugal filtration, filtration, filtration bag, or sieve, as necessary; (ii) a liquid obtained by dispersing dry powder of a food raw material containing the plant protein in water; (iii) a liquid obtained by, for example, removing components other than the plant protein from the liquid of the above (i) or (ii) to increase the content of the plant protein; and (iv) a liquid obtained by dissolving and/or dispersing the dry powder prepared from the liquid of any one of the above (i) to (iii) in water, and the liquid of the above (ii) is preferred. Typical examples of these liquid plant protein materials include so-called plant milk.

The content of the protein contained in the protein material is not particularly limited, and is, for example, 0.5 w/v% or more, 1 w/v% or more, preferably 2 w/v% or more, and more preferably 3 w/v% or more. The upper limit of the content range of the protein contained in the protein material is not particularly limited, and examples thereof include 30 w/v% or less, 25 w/v% or less, 20 w/v% or less, 15 w/v% or less, 12 w/v% or less, 10 w/v% or less, 8 w/v% or less, 6 w/v% or less, and 4 w/v% or less.

The protein material can contain other raw materials and/or food additives in addition to the above protein, depending on the type of protein fermented food or beverage to be obtained (" 1-7. Protein Fermented Food or Beverage" described later). Examples of other raw materials include components that are derived from food raw materials containing the above-described protein and inevitably coexisting. The food additive is not particularly limited as long as it is a food additive acceptable for use from a food science perspective, and examples thereof include plant fats and oils; seasonings such as salt, sugar, spices, sodium L-glutamate, disodium 5'-ribonucleotide, disodium 5'-inosinate, and disodium 5'-guanylate; antioxidants such as L-ascorbic acid; and flavors. The timing of adding the other raw materials and/or food additives is not particularly limited, and the other raw materials and/or food additives may be added at the time of being subjected to the fermentation step and/or the treatment step with enzymes, or may be added after both the fermentation step and the treatment step with enzymes are completed.

1-2. Microorganism Used for Fermentation

The microorganism used for the fermentation of the protein material is not particularly limited as long as it provides a fermented food or beverage, and examples thereof include lactic acid bacteria, bifidobacteria, koji molds, and yeasts. The lactic acid bacteria are not particularly limited, and examples thereof include lactic acid bacteria belonging to the genus Streptococcus, lactic acid bacteria belonging to the genus Lactobacillus, lactic acid bacteria belonging to the genus Leuconostoc, and lactic acid bacteria belonging to the genus Lactococcus.

These microorganisms may be used singly or in combination of two or more kinds thereof. Among these microorganisms, lactic acid bacteria are preferred, and lactic acid bacteria belonging to the genus Streptococcus and lactic acid bacteria belonging to the genus Lactococcus are more preferred, from the viewpoint of further enhancing the effect of improving various properties related to the protein fermented food or beverage.

1-3. Protein Deamidase

As long as the protein deamidase used in the present invention is an enzyme that exhibits an action of decomposing an amide group-containing side chain of a protein without cleavage of a peptide bond or crosslinking of the protein, the kind, origin, and the like thereof are not particularly limited. Examples of the protein deamidase include a protein deamidase derived from the genus Chryseobacterium, Flavobacterium, Empedobacter, Sphingobacterium, Aureobacterium, or Myroides, and a protein glutaminase derived from the genus Chryseobacterium, which are disclosed in Japanese Patent Laid-open Publication No. 2000-50887 A, Japanese Patent Laid-open Publication No. 2001-218590 A, and WO 2006/075772 A. These protein deamidases may be used singly or in combination of two or more kinds thereof.

Among these protein deamidases, a protein deamidase derived from the genus Chryseobacterium is preferred, a protein glutaminase derived from the genus Chryseobacterium is more preferred, and a protein glutaminase derived from the genus Chryseobacterium proteolyticum is still more preferred from the viewpoint of further enhancing the effect of improving various properties related to the protein fermented food or beverage.

The protein deamidase can be prepared from a culture solution of a microorganism from which the protein deamidase is derived. As a specific example of the preparation method, there may be mentioned a method of collecting a protein deamidase from a culture solution or a bacterial cell of the above microorganism. For example, in the case of using a microorganism that secrets protein deamidase, the enzyme can be separated and/or purified after bacterial cells are collected from the culture solution by filtration, centrifugation, or the like in advance as necessary. In the case of using a microorganism that does not secret protein deamidase, after bacterial cells are collected from the culture solution in advance as necessary, the bacterial cells are disrupted by pressurization treatment, ultrasonic treatment, or the like to expose the enzyme, and then the enzyme can be separated and/or purified. As an enzyme separation and/or purification method, a known protein separation and/or purification method can be used without particular limitation, and examples thereof include a centrifugal separation method, a UF concentration method, a salting-out method, and various chromatography methods using an ion exchange resin. The separated and/or purified enzyme can be pulverized by a drying method such as freeze-drying or reduced-pressure drying, and can also be pulverized using an appropriate excipient and/or drying aid in the drying method. The separated and/or purified enzyme can also be liquefied by adding an appropriate additive and subjecting it to filtration sterilization.

As the protein deamidase, a commercially available product can also be used, and as a preferred example of the commercially available product, there may be mentioned protein glutaminase "Amano" 500 manufactured by Amano Enzyme Inc.

The amount of the protein deamidase to be used is not particularly limited, but examples of the amount of the protein deamidase per g of protein include 0.001 to 1000 mU and 0.005 to 250 mU, and from the viewpoint of further improving various properties related to the fermented food or beverage using a protein material, the amount of the protein deamidase is preferably 0.01 to 150 mU, more preferably 0.05 to 100 mU, still more preferably 0.1 to 70 mU, even still more preferably 0.2 to 60 mU, further preferably 0.3 to 30 mU, particularly preferably 0.4 to 10 mU, and most preferably 0.4 to 1 mU.

In addition, the amount of the protein deamidase to be used is, for example, 0.00008 to 80 mU or 0.0004 to 20 mU as the amount of the protein deamidase per U of the multicopper oxidase, and from the viewpoint of further improving various properties related to the fermented food or beverage using a protein material, the amount of the protein deamidase is preferably 0.0008 to 13 mU, more preferably 0.004 to 9 mU, still more preferably 0.008 to 6 mU, even still more preferably 0.015 to 5 mU, further preferably 0.025 to 2.5 mU, particularly preferably 0.03 to 0.9 mU, and most preferably 0.03 to 0.09 mU.

For the activity of the protein deamidase, the amount of enzyme liberating 1 $\mu$mol of ammonia per minute using benzyloxycarbonyl-L-glutaminylglycine (Z-Gln-Gly) as a substrate is defined as 1 unit (1 U).

1-4. Multicopper Oxidase

The multicopper oxidase used in the present invention is a group of enzymes containing a plurality of copper atoms in a molecule and oxidizing polyphenol, methoxyphenol, diamine, bilirubin, ascorbic acid, and the like with molecular oxygen. The number of contained copper atoms is usually 2 to 8 as known so far, but this number is not particularly limited because it varies depending on the state of the enzyme preparation at the time of analysis and the analysis method. Examples of the enzyme classified as the multicopper oxidase include laccase, bilirubin oxidase, ascorbate oxidase, and ceruloplasmin.

These multicopper oxidases may be used singly or in combination of two or more kinds thereof. Among these multicopper oxidases, laccase is preferable from the viewpoint of further improving various properties related to the fermented food or beverage using a protein material.

Laccase is an enzyme having phenol oxidase activity (EC1.10.3.2). Specific examples of the laccase include laccases derived from microorganisms such as fungi and bacteria, and more specific examples include laccases derived from the genera Aspergillus, Neurospora, Podospora, Botrytis, Collybia, Fomes, Lentinus, Pleurotus, Pycnoporus, Pyricularia, Trametes, Rhizoctonia, Rigidoporus, Coprinus, Psatyrella, Myceliophtera, Schtalidium, Polyporus, Phlebia, and Coriolus.

These laccases may be used singly or in combination of two or more kinds thereof. Among these laccases, a laccase derived from the genus Trametes and a laccase derived from the genus Aspergillus (a laccase derived from Aspergillus oryzae is more preferred) are preferred, and a laccase derived from the genus Trametes is still more preferred, from the viewpoint of further improving various properties related to the fermented food or beverage using a protein material.

The amount of the multicopper oxidase to be used is not particularly limited, but the amount of the multicopper oxidase per g of protein is, for example, 0.1 to 100 U, and from the viewpoint of further improving various properties related to the fermented food or beverage using a protein material, the amount of the multicopper oxidase is preferably 1 to 50 U, more preferably 5 to 20 U, and still more preferably 10 to 15 U.

For the activity of the multicopper oxidase, when 0.1 ml of the enzyme solution is added to 3.0 ml of a 1.0 mg/ml solution of 2,2'-Azino-di-[3-ethylbenzthiazoline sulfonate] (ABTS) as a substrate, the reaction is performed at 25°C, and the absorbances at 405 nm after 1 minute and 3 minutes are measured, the amount of enzyme that increases the absorbance at 405 nm by 1.0 OD per minute is defined as 1 unit (U).

1-5. Order of Steps

The order of the step of fermenting the protein material and the step of treating with the enzymes (protein deamidase and multicopper oxidase) is freely selected. That is, either one of the fermentation step and the treatment step with the enzymes may be performed first, and after completion of the one step, the other step may be performed, or both steps may be performed simultaneously. In a case where both steps are performed simultaneously, the start timings of both steps may be the same time, or the start timing of one of the steps may be advanced. From the viewpoint of further enhancing the effect of improving various properties related to the protein fermented food or beverage, it is preferable to simultaneously perform both the fermentation step and the treatment step with the enzymes.

1-6. Conditions such as Reaction Conditions

The reaction conditions in the step of fermenting the protein material can be appropriately selected by those skilled in the art in consideration of the thermal stability of microorganisms, the order of the steps, that is, whether the treatment step with the enzymes is simultaneously performed, and the like, and the reaction condition is, for example, 20 to 45°C, preferably 25 to 30°C. The time for the fermentation step can be appropriately determined by those skilled in the art according to the type of the target protein fermented food or beverage, the fermentation temperature, and the like, and is, for example, 1 to 80 hours. When the fermentation temperature is 20 to 30°C, the specific fermentation time is preferably 20 to 60 hours and more preferably 40 to 50 hours. When the fermentation temperature is higher than 30°C and 45°C or lower, and particularly 37 to 43°C, the specific fermentation time is preferably 1 to 15 hours, more preferably 2 to 10 hours, and still more preferably 3 to 8 hours. In the fermentation step performed prior to the start of the treatment step with the enzymes, a protein material can be appropriately added along with the growth of microorganisms.

The reaction conditions in the treatment step with the enzymes can be appropriately determined by those skilled in the art in consideration of the optimum temperatures of the protein deamidase and the multicopper oxidase, the order of the steps, that is, whether the fermentation step is simultaneously performed, and the like, and the reaction condition is, for example, 4 to 80°C, preferably 15 to 50°C, more preferably 20 to 40°C, and still more preferably 25 to 30°C. The time for the treatment step with the enzymes can be appropriately determined by those skilled in the art according to the degree of various desired properties, the treatment temperature, and the like, and is, for example, 1 to 80 hours. When the treatment temperature is 4 to 30°C, particularly 20 to 30°C, the specific treatment time is preferably 20 to 60 hours, more preferably 40 to 50 hours. When the treatment temperature is more than 30°C and 80°C or less, particularly 35 to 45°C, the specific treatment time is preferably 1 to 15 hours, more preferably 2 to 10 hours, and still more preferably 3 to 8 hours.

1-7. Protein Fermented Food or Beverage

The protein fermented food or beverage produced by the production method of the present invention is not particularly limited. Examples of the form of the protein fermented food or beverage include a solid form, a gel form, and a liquid form. Specific examples of the protein fermented food or beverage include yogurt (an example of gel food), yogurt drink (an example of beverage), yogurt paste (an example of paste food and also used as a food ingredient), and cheese (an example of solid food).

From the viewpoint that the effect of improving various properties related to the protein fermented food or beverage is further enhanced, a preferred form of the protein fermented food or beverage is a gel form, and a preferred specific example of the protein fermented food or beverage is yogurt (gel food).

2. Modifier for Protein Fermented Food or Beverage

By using a combination of a protein deamidase and a multicopper oxidase for the production of a protein fermented food or beverage, the fermented food or beverage itself can be modified such that various properties such as stress, water retention, or syneresis inhibition are improved. Therefore, the present invention also provides a modifier for a protein fermented food or beverage, including a protein deamidase and a multicopper oxidase.

More specific examples of the modifier for a protein fermented food or beverage include those used as a stress improver for a protein fermented food or beverage, a water retention improver for a protein fermented food or beverage, and/or a syneresis inhibitor for a protein fermented food or beverage.

In the modifier for a protein fermented food or beverage, the kind, amount, and the like of components to be used are as described in the section "1. Method for Producing Protein Fermented Food or Beverage".

3. Fast-Fermenting Agent in Production of Protein Fermented Food or Beverage

By using a combination of a protein deamidase and a multicopper oxidase for the production of a protein fermented food or beverage, the fermentation efficiency during production is improved (that is, fermentation is fast). Therefore, the present invention also provides a fast-fermenting agent in the production of a protein fermented food or beverage, including a protein deamidase and a multicopper oxidase.

In the fast-fermenting agent in the production of a protein fermented food or beverage, the kind, amount, and the like of components to be used are as described in the section "1. Method for Producing Protein Fermented Food or Beverage".

EXAMPLES

Hereinafter, the present invention will be specifically described with reference to the examples, but the present invention is not to be construed as being limited to the following examples.

[Test Example 1]

(1) Materials Used

The materials shown in Table 1 were used.

[Table 1]

| Protein material | Cow's milk | Animal protein (milk protein) content 3.4 w/v% | Meiji Oishii Gyunyu (Meiji Co., Ltd.) |
|---|---|---|---|
| Microorganism for fermentation | Lactic acid bacteria | Lactococcus lactis subsp. cremoris strain BRF | Ousama no Yoguruto Tanekin (OHTA'S ISAN Co., Ltd.) |
| | Lactic acid bacteria | Streptococcus thermophilus strain KI-1 | |
| Protein deamidase | Protein glutaminase | Derived from Chryseobacterium proteolyticum | Protein glutaminase "Amano" 500 (Amano Enzyme Inc.) |
| Multicopper oxidase | Laccase | Derived from the genus Trametes | Laccase Y120 (Amano Enzyme Inc.) |

(2) Method for Measuring Enzyme Activity Value

(2-1) Method for Measuring Protein Deamidase Activity Value

The enzyme activity of the protein deamidase was measured by the method described below using N-benzyloxycarbonyl-L-glutaminylglycine (Z-Gln-Gly; PEPTIDE INSTITUTE, INC.) as a substrate.

Z-Gln-Gly was dissolved in 0.2 mol/L phosphate buffer (pH 6.5) to prepare a 30 mmol/L solution, and the solution was used as a substrate solution. In a test tube, 0.1 mL of an enzyme solution whose activity was to be measured was placed, and allowed to stand in a constant temperature water bath at $37 \pm 0.5°C$ for 1 minute. Then, 1 mL of the substrate solution previously allowed to stand at $37 \pm 0.5°C$ for 10 minutes was added, and the mixture was immediately mixed. This solution was allowed to stand for 10 minutes to perform an enzymatic reaction, and then 1 mL of a 0.4 mol/L trichloroacetic acid solution was added to stop the enzymatic reaction. A measurement blank was prepared by adding 0.1 mL of an enzyme solution to a test tube, and adding 1 mL of a 0.4 mol/L trichloroacetic acid solution and 1 mL of the substrate solution in this order. A color reaction by Ammonia Test Wako (FUJIFILM Wako Pure Chemical Corporation) was performed, and ammonia released by an enzymatic reaction for 10 minutes was quantified on the basis of a value of absorbance at a wavelength of 630 nm. The amount of enzyme that produces 1 $\mu$mol of ammonia per minute was defined as 1 unit (1 U), and the activity value was calculated from the amount of ammonia released by the enzymatic reaction.

(2-2) Method for Measuring Multicopper Oxidase Activity Value

The enzyme activity of the multicopper oxidase was measured by the method described below using 2,2'-Azino-di-[3-ethylbenzthiazoline sulfonate] (ABTS, manufactured by Boehringer Mannheim GmbH) as a substrate.

ABTS was dissolved in 25 mM citrate buffer (pH 3.2) at a concentration of 1.0 mg/ml to prepare a substrate solution. This substrate solution, 3.0 ml, was placed in a cuvette, preheated at 25°C, and then 0.1 ml of an enzyme solution was added, stirred, incubated at 25°C, and the absorbances at 405 nm after 1 minute and 3 minutes were measured. The amount of enzyme that increased the absorbance at 405 nm by 1.0 OD per minute under this condition was defined as 1 unit (U).

(3) Procedure

Lactic acid bacteria (inoculum) were inoculated into 5 mL of cow's milk, and was precultured at 28°C for 4 hours. The culture thus obtained, 1 mL, was added to 49 mL of new cow's milk and mixed, and protein glutaminase and/or laccase were further added in the amounts shown in Table 2 and mixed. The mixture was left standing at 28°C for 48 hours, and then left standing in a refrigerator for 2 to 4 hours (only when subjected to the test of syneresis inhibition, the conditions of being left standing were the conditions shown in the following (4-3)). That is, in this test example, the fermentation step and the enzyme treatment step were performed simultaneously. In this way, a yogurt (gel food) was obtained.

(4) Tests for Various Properties

The obtained yogurt was tested for the following various properties. The results are shown in Table 2.

(4-1) Stress

The stress of the obtained yogurt was measured using a rheometer (manufactured by Sun Scientific Co., Ltd.). The stress of the yogurt of Comparative Example 1 was defined as 100%, and the relative stress (%) was derived. It can be evaluated that the larger the value of the relative stress is, the better the stress is.

(4-2) Water Retention

The obtained yogurt was weighed, and then centrifuged under the conditions of 1000 × g, 10 minutes, and 20°C, the supernatant was collected, and the weight of the remaining yogurt was measured. The water retainability (%) was derived based on the following formula. It can be evaluated the larger the value of the water retainability is, the better the water retention is.

[Mathematical Formula 1]

$$\text{Water retainability (\%)} = 100 - \{(W1 - W2)/W1 \times 100\}$$

W1: weight (g) before centrifugation
W2: weight (g) after centrifugation and removal of supernatant

(4-3) Syneresis Inhibition

The weight of the yogurt (V1 (g)) was measured before refrigerated storage. The whole amount of the yogurt after the measurement was placed on the gauze with which the water-receiving container was covered, and stored in a refrigerator for 24 hours. After 24 hours, the weight of the naturally separated water accumulated in the water receiving container was measured. The weight of yogurt (V2 (g)) after 24 hours of refrigerated storage was calculated by subtracting the weight of the water from V1 (g). The syneresis (%) was derived based on the following formula. It can be evaluated that the smaller the value of the syneresis is, the better the syneresis inhibition is.

[Mathematical Formula 2]

$$\text{Syneresis (\%)} = 100 - (V2/V1 \times 100\}$$

V1: weight of yogurt (g) before refrigerated storage
V2: weight of yogurt (g) after 24 hours of refrigerated storage

[Table 2]

| | | | Comparative Example 1 | Comparative Example 2 | Comparative Example 3 | Example 1 |
|---|---|---|---|---|---|---|
| Addition amount | Protein glutaminase | Per g of milk protein (mU) | 0 | 0 | 50 | 50 |
| | Laccase | Per g of milk protein (U) | 0 | 12 | 0 | 12 |
| Relative stress (%) | | | 100 | 132 | 121 | 211 |
| Water retainability (%) | | | 89 | 92 | 87 | 98 |
| Syneresis (%) | | | 14 | 12 | 13 | 5 |

As shown in Table 2, although laccase or protein glutaminase alone does not have functions sufficient to improve various properties of yogurt, a combination of protein glutaminase with laccase was able to remarkably improve various properties of yogurt.

[Test Example 2]

Yogurt (gel food) was prepared by the same procedure as in Test Example 1 using protein glutaminase and/or laccase in the amounts shown in Table 3. During the preparation, the following measurements were carried out to evaluate the fast-fermenting effect and the influence on the taste. The results are shown in Table 3.

(1) Fast-Fermenting Effect

(1-1) Time until pH Reaches 5

From the time when the enzyme was added and the culture was started, the pH was measured over time, and the time until the pH reached 5 was measured. It can be evaluated that the shorter the time is, the higher the fermentation efficiency is (the more excellent the fast-fermenting effect is).

(1-2) Amount of EPS Produced

The amount of EPS (exopolysaccharide) was measured, by the following method, at 40 hours after the enzyme was added and the culture was started. The yogurt after 40 hours of culture was stirred, and a 40 wt% trichloroacetic acid aqueous solution having the same volume was added thereto, which was mixed. The resulting solution was centrifuged (2,200 g, 30 min, 4°C) to remove cells and proteins. Furthermore, in order to remove oligosaccharides and low molecular weight sugars, the supernatant was mixed with the same volume of ethanol and stored at 4°C for 24 hours. Centrifuged (9,000 g, 30 min, 4°C) precipitate was collected and dissolved in distilled water. The total sugar amount (EPS amount) of the fraction was calculated by the phenol sulfuric acid method. It can be evaluated that the larger the EPS amount is, the higher the fermentation efficiency is (the more excellent the fast-fermenting effect is).

(2) Influence on Taste (Amount of Lactic Acid Produced)

During the preparation, the amount of lactic acid was measured, using Lactate Assay Kit-WST (DOJINDO LABORATORIES), at 40 hours after the enzyme was added and the culture was started. It can be evaluated that there is no adverse effect on the taste due to excessive sourness when the increase in the amount of lactic acid is suppressed as compared with Comparative Example 4.

[Table 3]

|  |  |  | Comparative Example 4 | Comparative Example 5 | Comparative Example 6 | Example 2 |
|---|---|---|---|---|---|---|
| Addition amount | Protein glutaminase | Per g of milk protein (mU) | 0 | 0 | 50 | 50 |
|  | Laccase | Per g of milk protein (U) | 0 | 12 | 0 | 12 |
| Time until pH reaches 5 (h) |  |  | 20 | 16 | 17 | 12 |
| EPS amount after 40 hours (mg/kg of yogurt) |  |  | 53 | 68 | 131 | 166 |
| Lactic acid amount after 40 hours (g/100 g of yogurt) |  |  | 1.21 | 1.25 | 1.24 | 1.27 |

As shown in Table 3, when protein glutaminase and laccase were used in combination, an excellent fast-fermenting effect was obtained. In particular, from the results of the amount of EPS, the fast-fermenting effect obtained in the case of using protein glutaminase and laccase in combination was recognized as a synergistic effect in contrast to the case of using each enzyme alone. As described above, it was found that when protein glutaminase and laccase are used in combination, an excellent fast-fermenting effect is obtained, and since the amount of lactic acid is hardly changed, there is no adverse effect on the taste.

[Test Example 3]

Yogurt was prepared in the same manner as in Test Example 1 under conditions in which the amount of laccase was fixed while the amount of protein glutaminase was varied, and the relative stress was derived. As a result, when protein glutaminase was used in an amount of 0.05 to 100 mU (per g of milk protein) relative to 12 U of laccase (per g of milk protein), a remarkable relative stress improving effect was observed. The specific relative stress obtained when protein glutaminase was used in an amount of 0.05 to 100 mU is shown in Table 4.

[Table 4]

|  |  |  | Comparative Example 1 | Comparative Example 2 (replication study) | Comparative Example 3 (replication study) | Example 3 | Example 4 | Example 1 (replication study) | Example 5 |
|---|---|---|---|---|---|---|---|---|---|
| Addition amount | Protein glutaminase | Per g of milk protein (mU) | 0 | 0 | 50 | 0.05 | 0.5 | 50 | 100 |
|  |  | Per U of laccase (mU) | / | 0 | / | 0.004 | 0.04 | 4 | 8 |
|  | Laccase | Per g of milk protein (U) | 0 | 12 | 0 | 12 | 12 | 12 | 12 |
| Relative stress (%) |  |  | 100 | 135 | 121 | 209 | 221 | 216 | 209 |

As shown in Table 4, when protein glutaminase and laccase were combined, a significant improvement in the relative stress of yogurt was observed.

Claims

1. A method for producing a protein fermented food or beverage, the method comprising the steps of: fermenting a protein material; and treating with a protein deamidase and a multicopper oxidase.

2. The method according to claim 1, wherein the protein deamidase is protein glutaminase.

3. The method according to claim 1, wherein the multicopper oxidase is laccase.

4. The method according to claim 1, wherein the protein material is cow's milk.

5. The method according to claim 1, wherein the protein fermented food or beverage is yogurt.

6. A modifier for a protein fermented food or beverage, comprising a protein deamidase and a multicopper oxidase.

7. The modifier according to claim 6, which is used as a stress improver for a protein fermented food or beverage.

8. The modifier according to claim 6, which is used as a water retention improver for a protein fermented food or beverage.

9. The modifier according to claim 6, which is used as a syneresis inhibitor for a protein fermented food or beverage.

10. A fast-fermenting agent in production of a protein fermented food or beverage, comprising a protein deamidase and a multicopper oxidase.

## INTERNATIONAL SEARCH REPORT

| International application No. |
| --- |
| **PCT/JP2022/035225** |

### A. CLASSIFICATION OF SUBJECT MATTER

*A23L 5/00*(2016.01)i; *A23C 9/123*(2006.01)i; *A23L 29/00*(2016.01)i
FI:  A23L5/00 J; A23C9/123; A23L29/00

According to International Patent Classification (IPC) or to both national classification and IPC

### B. FIELDS SEARCHED

Minimum documentation searched (classification system followed by classification symbols)

A23L5/00; A23C9/123; A23L29/00

Documentation searched other than minimum documentation to the extent that such documents are included in the fields searched

Published examined utility model applications of Japan 1922-1996
Published unexamined utility model applications of Japan 1971-2022
Registered utility model specifications of Japan 1996-2022
Published registered utility model applications of Japan 1994-2022

Electronic data base consulted during the international search (name of data base and, where practicable, search terms used)

JSTPlus/JMEDPlus/JST7580      (JDreamIII);      MEDLINE/CAplus/FSTA/AGRICOLA/BIOSIS/BIOTECHNO/CABA/S
CISEARCH/TOXCENTER (STN)

### C. DOCUMENTS CONSIDERED TO BE RELEVANT

| Category* | Citation of document, with indication, where appropriate, of the relevant passages | Relevant to claim No. |
| --- | --- | --- |
| A | US 2017/0013852 A1 (VALIO LTD.) 19 January 2017 (2017-01-19) <br> paragraphs [0001], [0004]-[0016], [0206], [0208], [0230] | 1-10 |
| A | 三輪典子, ［特集:食品加工における酵素利用の最前線］ 1.タンパク質 1.2 タンパク 質脱アミド化酵素による食品の物性改良－乳分野での事例紹介－, 冷凍, Jan. 2019, vol. 94, no. 1095. (MIWA, Noriko. Special feature: Leading edge use of enzymes in food processing. 1. Proteins. 1.2 Improvement of Food Texture by Enzymatic Deamidation: The Use of Protein-Glutaminase for Dairy Products. Refrigeration.) <br> In particular,1. Overview of PG, 4. Applications in PG dairy products | 1-10 |
| A | WO 2017/170657 A1 (AJINOMOTO CO., INC.) 05 October 2017 (2017-10-05) <br> paragraph [0007] | 1-10 |
| A | WO 2011/024994 A1 (AJINOMOTO CO., INC.) 03 March 2011 (2011-03-03) <br> examples | 1-10 |
| A | CN 107279289 A (SOUTHWEST UNIVERSITY FOR NATIONALITIES) 24 October 2017 (2017-10-24) <br> paragraphs [0017]-[0024], [0027]-[0031] | 1-10 |

☑ Further documents are listed in the continuation of Box C.      ☑ See patent family annex.

| * | Special categories of cited documents: | "T" | later document published after the international filing date or priority date and not in conflict with the application but cited to understand the principle or theory underlying the invention |
| --- | --- | --- | --- |
| "A" | document defining the general state of the art which is not considered to be of particular relevance | | |
| "E" | earlier application or patent but published on or after the international filing date | "X" | document of particular relevance; the claimed invention cannot be considered novel or cannot be considered to involve an inventive step when the document is taken alone |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | | |
| "P" | document published prior to the international filing date but later than the priority date claimed | "&" | document member of the same patent family |

| Date of the actual completion of the international search | Date of mailing of the international search report |
| --- | --- |
| **08 November 2022** | **06 December 2022** |

| Name and mailing address of the ISA/JP | Authorized officer |
| --- | --- |
| **Japan Patent Office (ISA/JP)** <br> **3-4-3 Kasumigaseki, Chiyoda-ku, Tokyo 100-8915** <br> **Japan** | |
| | Telephone No. |

Form PCT/ISA/210 (second sheet) (January 2015)

**INTERNATIONAL SEARCH REPORT**

| International application No. |
| --- |
| **PCT/JP2022/035225** |

**C.     DOCUMENTS CONSIDERED TO BE RELEVANT**

| Category* | Citation of document, with indication, where appropriate, of the relevant passages | Relevant to claim No. |
| --- | --- | --- |
| A | JP 11-276162 A (AMANO PHARMACEUTICALS CO., LTD.) 12 October 1999 (1999-10-12) <br> claims 1-4 | 1-10 |
| P, X | WO 2021/187510 A1 (AMANO ENZYME INC.) 23 September 2021 (2021-09-23) <br> claims, paragraph [0073] | 1-9 |

Form PCT/ISA/210 (second sheet) (January 2015)

## INTERNATIONAL SEARCH REPORT
### Information on patent family members

International application No.

**PCT/JP2022/035225**

| Patent document cited in search report | | | Publication date (day/month/year) | Patent family member(s) | | | Publication date (day/month/year) |
|---|---|---|---|---|---|---|---|
| US | 2017/0013852 | A1 | 19 January 2017 | WO | 2015/150637 | A1 | |
| | | | | EP | 3125698 | A1 | |
| | | | | FI | 20145305 | A | |
| | | | | RU | 2016142358 | A | |
| WO | 2017/170657 | A1 | 05 October 2017 | US | 2019/0021353 | A1 | |
| | | | | paragraph [0008] | | | |
| | | | | EP | 3437481 | A1 | |
| | | | | BR | 112018069455 | A | |
| | | | | ES | 2899025 | T | |
| WO | 2011/024994 | A1 | 03 March 2011 | US | 2012/0207878 | A1 | |
| | | | | examples | | | |
| | | | | EP | 2474230 | A1 | |
| | | | | CN | 102480980 | A | |
| | | | | IL | 217865 | A | |
| | | | | MX | 2012002535 | A | |
| CN | 107279289 | A | 24 October 2017 | (Family: none) | | | |
| JP | 11-276162 | A | 12 October 1999 | US | 6121013 | A | |
| | | | | claims 1-4 | | | |
| | | | | US | 2002/0009770 | A1 | |
| | | | | EP | 947142 | A2 | |
| WO | 2021/187510 | A1 | 23 September 2021 | (Family: none) | | | |

**EP 4 406 421 A1**

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP H06197688 A
- WO 2012121090 A
- JP H06276933 A
- JP 2000050887 A
- JP 2001218590 A
- WO 2006075772 A